# EUROPEAN PATENT SPECIFICATION

(11) **EP 2 700 544 B1**
(45) Date of publication and mention of the grant of the patent: **27.07.2016**
(21) Application number: 12181623.5
(22) Date of filing: 24.08.2012
(51) Int. Cl.: B60R 21/02, E05D 11/10

(54) **Protective arrangement for a vehicle comprising a luggage-compartment divider**
Schutzanordnung für ein Fahrzeug mit Gepäckabteilteiler
Agencement de sécurité pour véhicule avec un diviseur de compartiment à bagages

(43) Date of publication of application: 26.02.2014
(73) Proprietor: Volvo Car Corporation, 40 531 Göteborg (SE)
(72) Inventor: Svensson, Birger, 42932 Kullavik (SE); Zengin, Fatma, 46331 Lilla Edet (SE)
(74) Representative: Kraenzmer, Martin

(56) References cited:
- EP-A1- 0 289 832
- EP-A2- 0 595 643
- EP-B1- 1 073 567

## Description

### Technical Field

The invention relates to a protective arrangement for a vehicle. The arrangement comprises a luggage-compartment divider which, in the vehicle, can be pivoted into a first position where two spaces in the vehicle are divided by the luggage-compartment divider, or into a second position thereby forming an opening between the two spaces. The luggage-compartment divider comprises a coupling arrangement being arranged on at least one side of the luggage-compartment divider where said coupling arrangement is adapted to engage in a mounting arrangement in the vehicle forming an articulation around which the luggage-compartment divider can pivot.

### Background Art

Protective arrangements for vehicles are known in the art. One form of protective arrangements is a luggage-compartment divider used for dividing two spaces in a vehicle. The purpose of a luggage-compartment divider is to ensure that luggage or cargo being stored in the rear of a vehicle cannot hit a driver or a passenger during for instance a sudden braking of the vehicle. The luggage-compartment divider may be either fixed in a position where it always divides the two spaces from each other or it may be arranged to be pivotable between a first position and a second position. In the second position the luggage-compartment divider lie in a position against the ceiling of the vehicle, thereby forming an opening between the two spaces.

A pivotable protective arrangement in the form of a luggage-compartment divider is described in EP 1073567 B1. In EP 1073567 B1, which discloses the preamble of claim 1, the luggage-compartment divider uses at least one spring element arranged to preload and fix the luggage-compartment divider in the first position and in the second position. The use of spring elements to preload the luggage-compartment divider in the different positions gives rise to a complicated setup of the luggage-compartment divider and to that more parts have to be used during manufacturing of the luggage-compartment divider making the entire protective arrangement more expensive.

There is thus a need for an improved protective arrangement for a vehicle.

### Disclosure of Invention

The object of the present invention is to provide an inventive arrangement for a protective arrangement for vehicles where the previously mentioned problems are avoided. This object is achieved by the features of the characterising portion of claim 1, wherein the coupling arrangement comprises a first coupling part, the first coupling part comprising a first engagement member;
the mounting arrangement comprising a second coupling part, the second coupling part comprising a second engagement member into which the first engagement member of the first coupling part can engage;
the first coupling part being arranged to be rotatable relative to the second coupling part;
the first coupling part being arranged to be resiliently movable in a longitudinal direction relative to the second coupling part and/or the second coupling part being arranged to be resiliently movable in a longitudinal direction relative to the first coupling part;
the first coupling part being arranged to rotate between said first position, in which the first engagement member is not engaged in the second engagement member, and said second position, in which the first engagement member is at least partly engaged in the second engagement member, by means of pivoting the luggage-compartment divider, thereby fixing the luggage-compartment divider in at least said second position.

The invention relates to a protective arrangement for a vehicle. The arrangement comprises a luggage-compartment divider which, in the vehicle, can be pivoted into a first position where two spaces in the vehicle are divided by the luggage-compartment divider, or into a second position thereby forming an opening between the two spaces. The luggage-compartment divider comprises a coupling arrangement being arranged on at least one side of the luggage-compartment divider where said coupling arrangement is adapted to engage in a mounting arrangement in the vehicle forming an articulation around which the luggage-compartment divider can pivot. The coupling arrangement comprises a first coupling part where the first coupling part comprises a first engagement member. The mounting arrangement comprises a second coupling part where the second coupling part comprises a second engagement member into which the first engagement member of the first coupling part can engage. The first coupling part is arranged to be rotatable relative to the second coupling part. The first coupling part is arranged to be resiliently movable in a longitudinal direction relative to the second coupling part and/or the second coupling part is arranged to be resiliently movable in a longitudinal direction relative to the first coupling part. The first coupling part is arranged to rotate between said first position, in which the first engagement member is not engaged in the second engagement member, and said second position, in which the first engagement member is at least partly engaged in the second engagement member, by means of pivoting the luggage-compartment divider, thereby fixing the luggage-compartment divider in at least said second position.

One advantage with the arrangement according to the invention is that the arrangement comprises fewer parts than previous solutions. This leads to that the arrangement is less expensive to manufacture and easier to mount in the vehicle while still maintaining the same functionality as previous solutions.

The arrangement allows for two distinct positions of the protective arrangement: a first position wherein the first and second engagement member is not engaged and a second position wherein the first and second engagement member is at least partly engaged. The transition between the first and second position is done by means of pivoting the luggage-compartment divider. In the first position where the luggage-compartment divider divides two spaces in the vehicle the first and second engagement members are not engaged. The luggage-compartment divider may be kept in place by the weight of the luggage-compartment divider. The force required to pivot the luggage-compartment divider is such that it does not arise during normal acceleration of the vehicle. The luggage-compartment divider may also be kept in place in the first position by that a third engagement member, located either on the first coupling part or the second coupling part, engages with the second engagement member or the first engagement member respectively.

That the first coupling parts may be arranged to be resiliently movable in a longitudinal direction relative to the second coupling part allows for the first engagement member to disengage from the second engagement member by that the first coupling part moves away from the second coupling part as the first coupling part rotates relative to the second coupling part. The rotation of the first coupling part enables the first engagement member to push the first coupling part away from the second coupling part, thereby allowing the first engagement member to move relative to the second engagement member. A corresponding action takes place if the second coupling part is arranged to be resiliently movable in a longitudinal direction relative to the first coupling part or if both the first and second coupling part are resiliently movable relative each other.

The first engagement member may be a protrusion and the second engagement member may be a depression. Alternatively, the first engagement member may be a depression and the second engagement member may be a protrusion. The depression and protrusion preferably has a corresponding shape such that they can engage with each other. The protrusion may for instance be triangular in shape. The depression is in this case shaped as a triangular recess with the sides of the triangles having the same angle as the sides of the recess. The protrusion may also be shaped as a truncated triangle, as a dome or as another geometrical shape. The protrusion may be shaped to mirror the depression such that the depression and protrusion can engage. The protrusion may also be shaped to only partly mirror the depression such that the depression and protrusion can engage. The protrusion may for instance not extend all the way to the bottom of the depression and the angles of the depression and the protrusion may not necessarily be the same.

The angles of the sides of the protrusion and depression in the cases where they are straight are between 15° and 60°, preferably between 20° and 45°, more preferably between 25° and 30°.

The first coupling part may be arranged to be resiliently movable relative to the second coupling part by means of a spring attached to the first coupling part. Alternatively, the second coupling part may be arranged to be resiliently movable relative to the coupling part member by means of a spring attached to the second coupling part. Alternatively, the first coupling part and the second coupling part are arranged to be resiliently movable relative to each other by means of a first spring attached to the first coupling part and a second spring attached to the second coupling part. The spring or springs may be of any kind suitable for contraction in a longitudinal direction.

The second coupling part may comprise a third engagement member in the form of a depression being arranged to engage with the first engagement member and wherein, in the second position, the first engagement member is engaged with the third engagement member, thereby fixing the luggage-compartment divider in said second position. Alternatively, the first coupling part may comprise a third engagement member in the form of a depression being arranged to engage with the second engagement member and wherein, in the second position, the second engagement member is engaged with the third engagement member, thereby fixing the luggage-compartment divider in said second position. Instead of having the weight of the luggage-compartment divider keeping the luggage-compartment divider in place in the second position, the first or second coupling part may comprise a third engagement member in the form of a depression. Thus, when the luggage-compartment divider is pivoted to the second position the first engagement member engages with the third engagement member, thereby fixing the luggage-compartment divider in the second position. The same characteristics for the third engagement member as for the first and second engagement member described above apply.

The mounting arrangement may be arranged on the ceiling of the vehicle, on both sides of the vehicle and in a region above a backrest arranged in the vehicle, so that a portion of the luggage-compartment divider bears against the rear side of the backrest in the first position and against the ceiling in the second position. In the second position, the first engagement member may only be partially engaged with the second engagement member, such that the luggage-compartment divider is biased towards the first position. It may be possible to arrange the relative position between the first coupling part and the second coupling part such that the first engagement member and the second engagement member do not fully engage. This leads to that the luggage-compartment divider strives towards the first position although the luggage-compartment divider bears against the ceiling of the vehicle. This makes it harder for the luggage-compartment to unintentionally move from the second position to the first position.

Said portion of the luggage-compartment divider may comprise a ferrule made of a resilient material.

The luggage-compartment divider may comprise a grille made of metal or a metal alloy such as steel and/or a poly(methyl methacrylate) panel.

A protective arrangement according to the invention may be used in a vehicle.

### Brief Description of Drawings

Figure 1 schematically shows a protective arrangement according to the invention;
Figure 2 schematically shows a coupling arrangement and left mounting of the protective arrangement according to the invention;
Figure 3 schematically shows a right mounting of the protective arrangement according to the invention;
Figure 4 schematically shows a left mounting and a coupling arrangement according to the invention;
Figure 5a schematically shows a first engagement member and a second engagement member according to the invention;
Figure 5b schematically shows a first engagement member and a second engagement member according to the invention;
Figure 5c schematically shows a first engagement member and a second engagement member according to the invention;
Figure 5d schematically shows a first engagement member and a second engagement member according to the invention.

### Detailed Description of Drawings

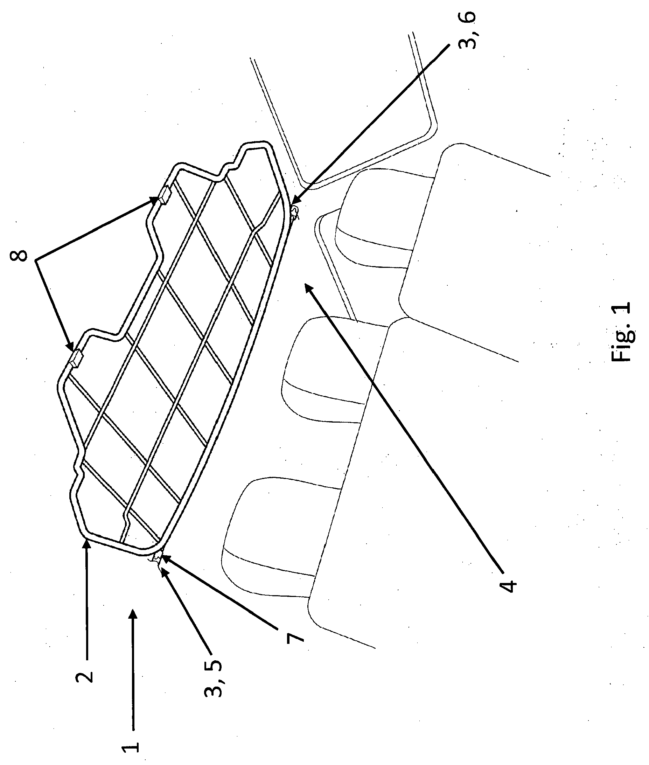

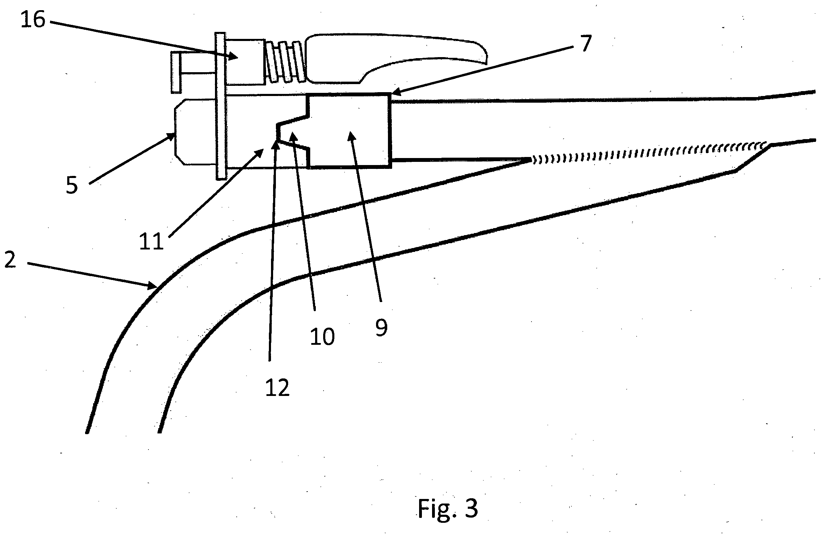

Figure 1 schematically shows a protective arrangement 1 according to the invention inside a vehicle. The protective arrangement 1 comprises a protective arrangement 2 in the form of a grille. The protective arrangement 2 shown in figure 1 is made from steel tubes and is, on each side of an upper part of the protective arrangement 2, pivotably connected to a mounting arrangement 3 located on a vehicle ceiling 4. The mounting arrangement 3 comprises a left mounting 5 and a right mounting 6. The protective arrangement 2 comprises a coupling arrangement 7 being arranged on the left side of the protective arrangement 2. Said coupling arrangement 7 is adapted to engage in the corresponding left mounting 5 mounted on the ceiling 4 of the left side of the vehicle. The coupling arrangement 7 and left mounting 5 forms an articulation around which the protective arrangement 2 can pivot. In figure 1 the coupling arrangement 7 is located on only the left side of the protective arrangement 2. The right side of the protective arrangement 2 comprises a right hole through which a right pin located on the right mounting 6 of the mounting arrangement 3 can be introduced. The right hole and the right pin forms an articulation around which the protective arrangement 2 can pivot. This is further described in figure 3. It is possible to have a coupling arrangement 7 and mounting arrangement 3 that can engage with each other on the left side, the right side or both sides of the vehicle.

Two ferrules 8 made of a resilient material such as rubber, are arranged on the lower part of the protective arrangement 2. The ferrules 8 form a portion of the protective arrangement 2, which is arranged so as to bear against the rear side of a backrest.

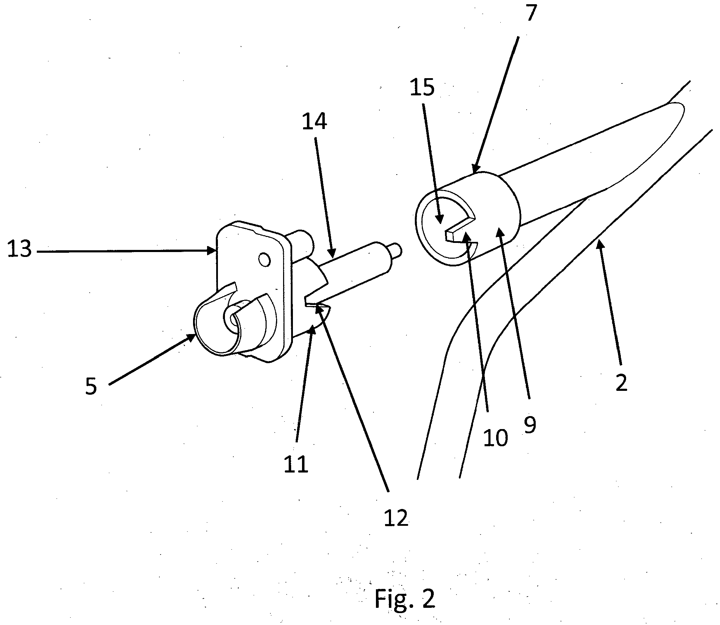

Figure 2 schematically shows a left mounting 5 and a coupling arrangement 7 according to the invention. The coupling arrangement 7 comprises a first coupling part 9, where the first coupling part 9 comprises a first engagement member 10. The left mounting 5 of the mounting arrangement 3 comprises a second coupling part 11, where the second coupling part 11 comprises a second engagement member 12 into which the first engagement member 10 of the first coupling part 9 can engage.

The left mounting 5 comprises a left mounting plate 13 onto which a left pin 14 is attached. On the left mounting plate 13, enclosing the left pin 14, the second coupling part 11 is mounted. The second coupling part 11 comprises the second engagement member 12 in the form of a depression in the second coupling part 11. In figure 2 the left mounting 5 shown is intended to be placed on the left side of the vehicle.

The second coupling part 11 may be attached to the left mounting plate 13 by means of a spring such that the second coupling part 11 may move longitudinally away from the first coupling part 9 when the protective arrangement 2 pivots.

The coupling arrangement 7 extends from a top part of the protective arrangement 2. The coupling arrangement 7 ends with the first coupling part 9 and comprises a left hole 15 into which the left pin 14 of the left mounting 5 fits. This allows the first coupling part 9 and second coupling part 11 to rotate relative to each other when the protective arrangement 2 pivots between the first and second position.

Figure 3 schematically shows a coupling arrangement 7 and left mounting 5 of the protective arrangement 1 according to the invention. As can be seen in figure 1 the left mounting 5 and thereby the second coupling part 11 is attached to the inside of a vehicle, for instance to the ceiling 4. The left mounting 5 is attached to the vehicle by means of a mounting attachment 16. The mounting attachment 16 is known in the art and will not be described further. The coupling arrangement 7 and thereby the first coupling part 9 is attached to the protective arrangement 2. In figure 3 the first engagement member 10 of the first coupling part 9 is shown to be a protrusion which engages into the second engagement member 12 of the second coupling part 11, which in figure 3 is shown to be a depression. The opposite is also possible, i.e. the first engagement member 10 can be a depression and the second engagement member 12 can be a protrusion.

The first coupling part 9 is arranged to be rotatable relative to the second coupling part 11. The first coupling part 9 is arranged to rotate between a first position, in which the first engagement member 10 is not engaged in the second engagement member 12, and a second position, in which the first engagement member 10 is at least partly engaged in the second engagement member 12, by means of pivoting the protective arrangement 2, thereby fixing the protective arrangement 2 in at least said first position. In figure 3 the protective arrangement 2 thus is in the second position.

The second coupling part 11 may comprise a third engagement member (not shown) being arranged to engage with the first engagement member 10. In the first position, the first engagement member 10 is engaged with the third engagement member, thereby fixing the protective arrangement 2 in said first position. Alternatively, the first coupling part 9 comprises a third engagement member being arranged to engage with the second engagement member 12. In the first position, the second engagement member 12 is engaged with the third engagement member, thereby fixing the protective arrangement 2 in said first position. The first coupling part 9 is arranged to be resiliently movable in a longitudinal direction relative to the second coupling part 11. With longitudinal direction means a direction along the width of the protective arrangement 2, i.e. in a direction extending from the left side to the right side of the protective arrangement 2. Alternatively, the second coupling part 11 is arranged to be resiliently movable in a longitudinal direction relative to the first coupling part 9.

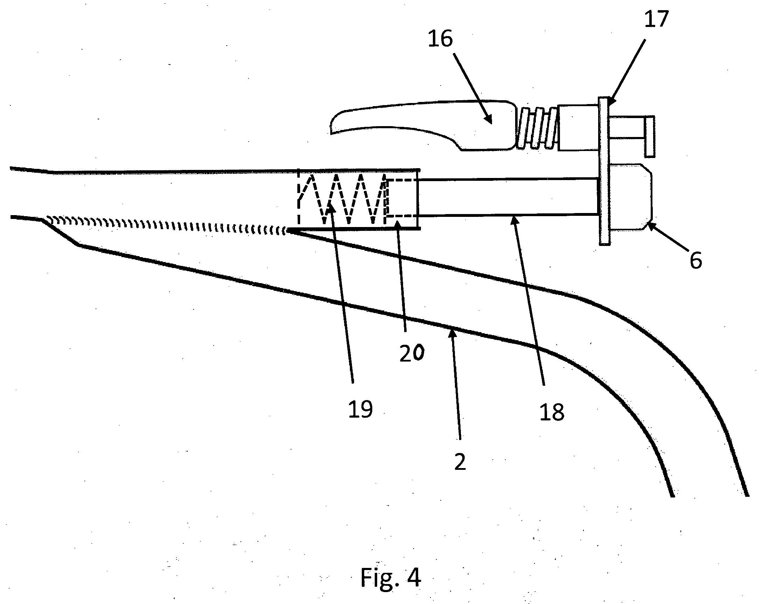

Figure 4 schematically shows a right mounting 6 of the protective arrangement 1 according to the invention. The right mounting 6 is constructed similar to the left mounting 5 shown in figure 2. The right mounting 6 comprises a right mounting plate 17 and a right pin 18. The right mounting 6 in this example does not have a second coupling part 11 mounted around the right pin 18. In case the coupling arrangement 7 is attached to the right side of the protective arrangement 2 the right mounting 6 would have a second coupling part 11 mounted around the right pin 18.

The first coupling part 9 may be arranged to be movable relative to the second coupling part 11 by means of that the entire protective arrangement 2 is movable in a longitudinal direction. A spring 19 located in a right hole 20 of the right side of the protective arrangement 2.The right pin of the right mounting 6 is inserted into the right hole 20 and abuts the spring 19. The spring 19 is arranged to be compressed when the protective arrangement 2 moves longitudinally as the protective arrangement 2 pivots between the first and second position. This ensures that the protective arrangement 2 springs back into place when the protective arrangement 2 returns to the first position.

The first coupling may alternatively be arranged to be movable relative to the second coupling part 11 by means of that the first coupling part 9 is arranged to be movable relative to the protective arrangement 2. The first coupling part 9 is in this case mounted on the protective arrangement 2 as a jacket (not shown) which is able to rotate with the protective arrangement 2 while at the same time being able to move relative to the protective arrangement 2. This is done through that the jacket is mounted on the protective arrangement 2 with a spring inside the jacket that can compress when the protective arrangement 2 is pivoted between the first and second position.

By having the first coupling part 9 arranged to move resiliently in a longitudinal direction relative to the second coupling part 11 the first coupling part 9 can move in a direction away from the second coupling part 11 when the protective arrangement 2 pivots by means of that the first engagement member 10 slides longitudinally along the side of the second engagement member 12, the first engagement member 10 thereby disengaging from the second engagement member 12.

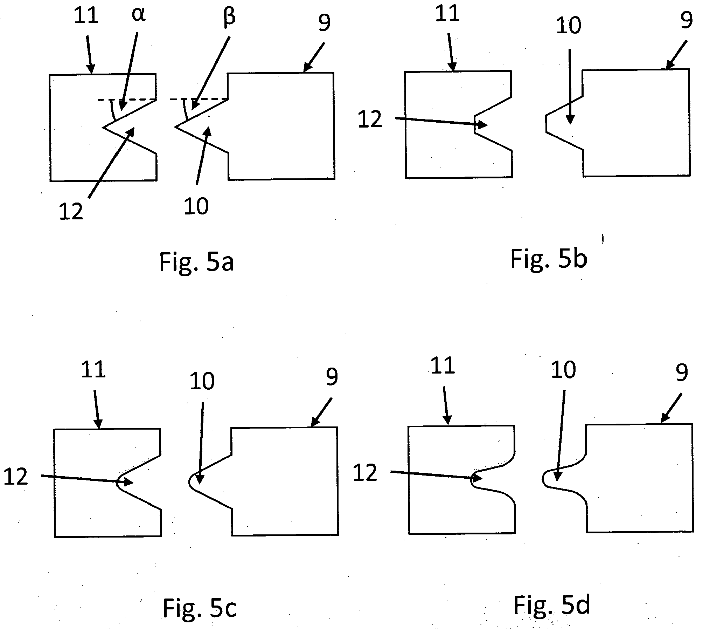

Figure 5a schematically shows a first coupling part 9 with a first engagement member 10 and second coupling part 11 with a second engagement member 12 according to the invention. In figure 5a the second engagement member 12 is in the shape of a triangular depression. The first engagement means is in the shape of a triangular protrusion. The size of the depression and protrusion and the angles of the sides of the first engagement member 10 and the second engagement member 12 are for illustrative purposes only. The angle α between of the sides of the depression is indicated in figure 5a. The angle β of the protrusion is also indicated in figure 5a. Where applicable, the angles α and β are measured in the same way in figure 5b-5d. As indicated α may be equal to β as is shown in figure 5a, but α may also be different from β. The ranges of α and β are as indicated above.

Figure 5b schematically shows a first coupling part 9 with a first engagement member 10 and second coupling part 11 with a second engagement member 12 according to the invention. In figure 5b the second engagement member 12 is in the shape of a depression shaped like a truncated triangle. The first engagement means is in the shape of a protrusion shaped like a truncated triangle. The size of the depression and protrusion and the angles of the sides of the first engagement member 10 and the second engagement member 12 are for illustrative purposes only.

Figure 5c schematically shows a first coupling part 9 with a first engagement member 10 and second coupling part 11 with a second engagement member 12 according to the invention. In figure 5c the second engagement member 12 is in the shape of a triangular depression with the triangle having a curved top. The first engagement means is in the shape of a triangular protrusion having a curved top. The size of the depression and protrusion, the angles of the sides of the first engagement member 10 and the second engagement member 12 as well as the size of the curved top are for illustrative purposes only. Figure 5d schematically shows a first coupling part 9 with a first engagement member 10 and second coupling part 11 with a second engagement member 12 according to the invention. In figure 5d the second engagement member 12 comprises curved sides and a rounded bottom. The first engagement means is in the shape of a triangular protrusion having a rounded top. The size of the depression and protrusion and the curvature of the sides of the first engagement member 10 and the second engagement member 12 as well as the size of the curved top are for illustrative purposes only.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive. For instance the shapes of the first and second engagement members may be varied within the scope of the invention to take other geometric shapes than the one described in the drawings, such as for instance domes, semicircles, arcs. Further, any combination of the spring arrangements described above is possible to ensure that either the first coupling part and/or the second coupling part can move resiliently relative each other in a longitudinal direction.

## Claims

1. Protective arrangement (1) for a vehicle, comprising a protective arrangement (2) which, in the vehicle, can be pivoted into a first position where two spaces in the vehicle are divided by the protective arrangement (2), or into a second position thereby forming an opening between the two spaces; the protective arrangement (2) comprising a coupling arrangement (7) being arranged on at least one side of the protective arrangement (2); said coupling arrangement (7) being adapted to engage in a mounting arrangement (3) in the vehicle forming an articulation around which the protective arrangement (2) can pivot, **characterized in that** the coupling arrangement (7) comprises a first coupling part (9), the first coupling part (9) comprising a first engagement member (10);
the mounting arrangement (3) comprising a second coupling part (11), the second coupling part (11) comprising a second engagement member (12) into which the first engagement member (10) of the first coupling part (9) can engage;
the first coupling part (9) being arranged to be rotatable relative to the second coupling part (11);
the first coupling part (9) being arranged to be resiliently movable in a longitudinal direction relative to the second coupling part (11);
the first coupling part (9) being arranged to rotate between said first position, in which the first engagement member (10) is not engaged in the second engagement member (12), and said second position, in which the first engagement member (10) is at least partly engaged in the second engagement member (12), by means of pivoting the protective arrangement (2), thereby fixing the protective arrangement (2) in at least said second position.

2. Protective arrangement (1) according to claim 1, wherein the second coupling part (11) being arranged to be resiliently movable in a longitudinal direction relative to the first coupling part (9).

3. Protective arrangement (1) according to claims 1 or 2, wherein the first engagement member (10) is a protrusion and the second engagement member (12) is a depression.

4. Protective arrangement (1) according to claims 1 or 2, wherein the first engagement member (10) is a depression and the second engagement member (12) is a protrusion.

5. Protective arrangement (1) according to any one of the preceding claims, wherein the first coupling part (9) is arranged to be resiliently movable relative to the second coupling part (11) by means of a spring (19) attached to the luggage-compartment divider (2).

6. Protective arrangement (1) according to any one of claims 2-4, wherein the second coupling part (11) is arranged to be resiliently movable relative to the first coupling part (9) by means of a spring attached to the second coupling part (11).

7. Protective arrangement (1) according to any one of the preceding claims, wherein the first coupling part (9) and the second coupling part (11) are arranged to be resiliently movable relative to each other by means of a first spring (19) attached to the first coupling part (9) and a second spring attached to the second coupling part (11).

8. Protective arrangement (1) according to any one of claims 3 and 5-7, wherein the second coupling part (11) comprises a third engagement member in the form of a depression being arranged to engage with the first engagement member (10) and wherein, in the first position, the first engagement member (10) is engaged with the third engagement member, thereby fixing the protective arrangement (2) in said first position.

9. Protective arrangement (1) according to any one of claims 4-7, wherein the first coupling part (9) comprises a third engagement member in the form of a depression being arranged to engage with the second engagement member (12) and wherein, in the first position, the second engagement member (12) is engaged with the third engagement member, thereby fixing the protective arrangement (2) in said first position.

10. Protective arrangement (1) according to any one of the preceding claims, wherein the mounting (3) is arranged on the ceiling (4) of the vehicle, on both sides of the vehicle and in a region above a backrest arranged in the vehicle, so that a portion of the protective arrangement (2) bears against the rear side of the backrest in the first position and against the ceiling (4) in the second position.

11. Protective arrangement (1) according to claim 9, wherein in the second position the first engagement member (10) is only partially engaged with the second engagement member (12), such that the protective arrangement (2) is biased towards the second position.

12. Protective arrangement (1) according to Claim 10, wherein said portion of the protective arrangement (2) bearing against the backrest or ceiling the comprises a ferrule made of a resilient material.

13. Protective arrangement (1) according to any one of the preceding claims, wherein the protective arrangement (2) comprises a grille made of steel and/or a poly(methyl methacrylate) panel.

14. Protective arrangement (1) according to any one of claims 3-13, wherein said depression is in the shape of a triangle, a truncated triangle or a curve.

15. Vehicle comprising a protective arrangement (1) according to any one of the preceding claims.

## Patentansprüche

1. Schutzanordnung (1) für ein Fahrzeug, umfassend eine Schutzanordnung (2), die in dem Fahrzeug in eine erste Position, wodurch zwei Räume in dem Fahrzeug durch die Schutzanordnung (2) geteilt werden, oder in eine zweite Position, wodurch eine Öffnung zwischen den zwei Räumen gebildet wird, geschwenkt werden kann; wobei die Schutzanordnung (2) eine Koppelanordnung (7) umfasst, die mindestens auf einer Seite der Schutzanordnung (2) angeordnet ist; wobei die Koppelanordnung (7) ausgelegt ist, um in eine Befestigungsanordnung (3) in dem Fahrzeug einzugreifen, die ein Gelenk bildet, um welche die Schutzanordnung (2) schwenken kann, **dadurch gekennzeichnet, dass** die Koppelanordnung (7) ein erstes Koppelteil (9) umfasst, wobei das erste Koppelteil (9) ein erstes Eingriffselement (10) umfasst;
wobei die Befestigungsanordnung (3) ein zweites Koppelteil (11) umfasst, wobei das zweite Koppelteil (11) ein zweites Eingriffselement (12) umfasst, in welches das erste Eingriffselement (10) des ersten Koppelteils (9) eingreifen kann;
wobei das erste Koppelteil (9) angeordnet ist, um in Bezug auf das zweite Koppelteil (11) drehbar zu sein;
wobei das erste Koppelteil (9) angeordnet ist, um elastisch in Längsrichtung in Bezug auf das zweite Koppelteil (11) drehbar zu sein;
wobei das erste Koppelteil (9) zum Drehen zwischen der ersten Position, bei welcher das erste Eingriffselement (10) nicht in das zweite Eingriffselement (12) eingreift, und der zweiten Position, bei der das erste Eingriffselement (10) durch Schwenken der Schutzanordnung (2) mindestens teilweise mit dem zweiten Eingriffselement (12) in Eingriff steht, angeordnet ist, wodurch die Schutzanordnung (2) in mindestens der zweiten Position fixiert wird.

2. Schutzanordnung (1) nach Anspruch 1, wobei das zweite Koppelteil (11) angeordnet ist, um elastisch in Längsrichtung in Bezug auf das erste Koppelteil (9) beweglich zu sein.

3. Schutzanordnung (1) nach einem der Ansprüche 1 oder 2, wobei das erste Eingriffselement (10) ein Vorsprung ist und das zweite Eingriffselement (12) eine Vertiefung ist.

4. Schutzanordnung (1) nach einem der Ansprüche 1 oder 2, wobei das erste Eingriffselement (10) eine Vertiefung ist und das zweite Eingriffselement (12) ein Vorsprung ist.

5. Schutzanordnung (1) nach einem der vorhergehenden Ansprüche, wobei das erste Koppelteil (9) angeordnet ist, um elastisch in Bezug auf das zweite Koppelteil (11) mittels einer Feder (19) beweglich zu sein, die an dem Gepäckabteilteiler (2) befestigt ist.

6. Schutzanordnung (1) nach einem der Ansprüche 2 bis 4, wobei das zweite Koppelteil (11) angeordnet ist, um elastisch in Bezug auf das erste Koppelteil (9) mittels einer Feder beweglich zu sein, die an dem zweiten Koppelteil (11) befestigt ist.

7. Schutzanordnung (1) nach einem der vorhergehenden Ansprüche, wobei das erste Koppelteil (9) und das zweite Koppelteil (11) angeordnet sind, um elastisch in Bezug aufeinander mittels einer ersten Feder (19), die an dem ersten Koppelteil (9) befestigt ist, und einer zweiten Feder, die an dem zweiten Koppelteil (11) befestigt ist, beweglich zu sein.

8. Schutzanordnung (1) nach einem der Ansprüche 3 und 5 bis 7, wobei das zweite Koppelteil (11) ein drittes Eingriffselement in Form einer Vertiefung aufweist, die zum Eingreifen mit dem ersten Eingriffselement (10) angeordnet ist, wobei, in der ersten Position, das erste Eingriffselement (10) mit dem dritten Eingriffselement in Eingriff steht, wodurch die Schutzanordnung (2) in der ersten Position fixiert ist.

9. Schutzanordnung (1) nach einem der Ansprüche 4 bis 7, wobei das erste Koppelteil (9) ein drittes Eingriffselement in Form einer Vertiefung aufweist, die zum Eingreifen mit dem zweiten Eingriffselement (12) angeordnet ist, wobei, in der ersten Position, das zweite Eingriffselement (12) mit dem dritten Eingriffselement in Eingriff steht, wodurch die Schutzanordnung (2) in der ersten Position fixiert ist.

10. Schutzanordnung (1) nach einem der vorhergehenden Ansprüche, wobei die Halterung (3), die an der Fahrzeugdecke (4) angeordnet ist, auf beiden Seiten des Fahrzeugs und in einem Bereich oberhalb der Rückenlehne in dem Fahrzeug angeordnet ist, sodass ein Abschnitt der Schutzanordnung (2) an die hintere Seite der Rückenlehne in der ersten Position und an der Decke (4) in der zweiten Position lagert.

11. Schutzanordnung (1) nach Anspruch 9, wobei in der zweiten Position das erste Eingriffselement (10) nur teilweise in das zweite Eingriffselement (12) eingreift, sodass die Schutzanordnung (2) zur zweiten Position vorgespannt ist.

12. Schutzanordnung (1) nach Anspruch 10, wobei der Abschnitt der Schutzanordnung (2), die an der Rückenlehne oder Decke lagert, eine Hülse aus einem elastischen Material umfasst.

13. Schutzanordnung (1) nach einem der vorhergehenden Ansprüche, wobei die Schutzanordnung (2) ein Gitter aus Stahl und/oder eine Platte aus Poly(methylmethacrylat) umfasst.

14. Schutzanordnung (1) nach einem der Ansprüche 3 bis 13, wobei die Vertiefung in Form eines Dreiecks, eines stumpfen Dreiecks oder einer Krümmung vorliegt.

15. Fahrzeug, umfassend eine Schutzanordnung (1) nach einem der vorhergehenden Ansprüche.

## Revendications

1. Système de protection (1) pour un véhicule, comprenant un système de protection (2) qui, dans le véhicule, peut être pivoté jusqu'à une première position dans laquelle deux espaces dans le véhicule sont divisés par le système de protection (2), ou jusqu'à une seconde position de façon à former ainsi une ouverture entre les deux espaces ; le système de protection (2) comprenant un système d'accouplement (7) disposé sur au moins un côté du système de protection (2) ; ledit système d'accouplement (7) étant conçu pour s'emboîter dans un système de montage (3) dans le véhicule de façon à former une articulation autour de laquelle le système de protection (2) peut pivoter, **caractérisé en ce que** le système d'accouplement (7) comprend une première partie d'accouplement (9), la première partie d'accouplement (9) comprenant un premier élément d'emboîtement (10) ;
le système de montage (3) comprenant une seconde partie d'accouplement (11), la seconde partie d'accouplement (11) comprenant un deuxième élément d'emboîtement (12) dans lequel peut s'emboîter le premier élément d'emboîtement (10) de la première partie d'accouplement (9) ;
la première partie d'accouplement (9) étant conçue pour être rotative par rapport à la seconde partie d'accouplement (11) ;
la première partie d'accouplement (9) étant conçue pour être mobile de manière élastique dans une direction longitudinale par rapport à la seconde partie d'accouplement (11) ;
la première partie d'accouplement (9) étant conçue pour tourner entre ladite première position, dans laquelle le premier élément d'emboîtement (10) n'est pas emboîté dans le deuxième élément d'emboîtement (12), et ladite seconde position, dans laquelle le premier élément d'emboîtement (10) est au moins partiellement emboîté dans le deuxième élément d'emboîtement (12), par le bais d'un pivotement du système de protection (2), de façon à fixer ainsi le système de protection (2) au moins dans ladite seconde position.

2. Système de protection (1) selon la revendication 1, dans lequel la seconde partie d'accouplement (11) est conçue pour être mobile de manière élastique dans une direction longitudinale par rapport à la première partie d'accouplement (9).

3. Système de protection (1) selon la revendication 1 ou 2, dans lequel le premier élément d'emboîtement (10) est une saillie et le deuxième élément d'emboîtement (12) est un creux.

4. Système de protection (1) selon la revendication 1 ou 2, dans lequel le premier élément d'emboîtement (10) est un creux et le deuxième élément d'emboîtement (12) est une saillie.

5. Système de protection (1) selon l'une quelconque des revendications précédentes, dans lequel la première partie d'accouplement (9) est conçue pour être mobile de manière élastique par rapport à la seconde partie d'accouplement (11) par le biais d'un ressort (19) attaché au diviseur de compartiment à bagages (2).

6. Système de protection (1) selon l'une quelconque des revendications 2 à 4, dans lequel la seconde partie d'accouplement (11) est conçue pour être mobile de manière élastique par rapport à la première partie d'accouplement (9) par le biais d'un ressort attaché à la seconde partie d'accouplement (11).

7. Système de protection (1) selon l'une quelconque des revendications précédentes, dans lequel la première partie d'accouplement (9) et la seconde partie d'accouplement (11) sont conçues pour être mobiles de manière élastique l'une par rapport à l'autre par le biais d'un premier ressort (19) attaché à la première partie d'accouplement (9) et d'un second ressort attaché à la seconde partie d'accouplement (11).

8. Système de protection (1) selon l'une quelconque des revendications 3 et 5 à 7, dans lequel la seconde partie d'accouplement (11) comprend un troisième élément d'emboîtement se présentant sous la forme d'un creux étant conçu pour s'emboîter avec le premier élément d'emboîtement (10) et dans lequel, dans la première position, le premier élément d'emboîtement (10) est emboîté avec le troisième élément d'emboîtement, de façon à fixer ainsi le système de protection (2) dans ladite première position.

9. Système de protection (1) selon l'une quelconque des revendications 4 à 7, dans lequel la première partie d'accouplement (9) comprend un troisième élément d'emboîtement se présentant sous la forme d'un creux étant conçu pour s'emboîter avec le deuxième élément d'emboîtement (12) et dans lequel, dans la première position, le deuxième élément d'emboîtement (12) est emboîté avec le troisième élément d'emboîtement, de façon à fixer ainsi le système de protection (2) dans ladite première position.

10. Système de protection (1) selon l'une quelconque des revendications précédentes, dans lequel le système de montage (3) est disposé sur le plafond (4) du véhicule, sur les deux côtés du véhicule et dans une région située au-dessus d'un dossier disposé dans le véhicule, de telle sorte qu'une partie du système de protection (2) soit en appui contre le côté arrière du dossier dans la première position et contre le plafond (4) dans la seconde position.

11. Système de protection (1) selon la revendication 9, dans lequel, dans la seconde position, le premier élément d'emboîtement (10) est seulement partiellement emboîté avec le deuxième élément d'emboîtement (12), de telle sorte que le système de protection (2) soit sollicité vers la seconde position.

12. Système de protection (1) selon la revendication 10, dans lequel ladite partie du système de protection (2) en appui contre le dossier ou le plafond comprend un embout constitué d'un matériau élastique.

13. Système de protection (1) selon l'une quelconque des revendications précédentes, dans lequel le système de protection (2) comprend une grille constituée d'acier et/ou un panneau en poly(méthacrylate de méthyle).

14. Système de protection (1) selon l'une quelconque des revendications 3 à 13, dans lequel ledit creux présente la forme d'un triangle, d'un triangle tronqué ou d'une courbe.

15. Véhicule comprenant un système de protection (1) selon l'une quelconque des revendications précédentes.
